# EUROPEAN PATENT APPLICATION

(11) **EP 4 852 201 A1**
(43) Date of publication of application: **09.12.2026**
(21) Application number: 25820855.2
(22) Date of filing: 12.02.2025
(51) Int. Cl.: H01M 50/503, H01M 50/103

(54) **BATTERY AND ELECTRIC APPARATUS**

(30) Priority: 11.06.2024 CN 202421325232 U
(71) Applicant: Contemporary Amperex Technology Co., Limited, Ningde, Fujian 352100 (CN)
(72) Inventor: CHENG, Qi, Ningde, Fujian 352100 (CN); ZHOU, Wenlin, Ningde, Fujian 352100 (CN); XIE, Yongfeng, Ningde, Fujian 352100 (CN); WANG, Liqin, Ningde, Fujian 352100 (CN); LI, Quankun, Ningde, Fujian 352100 (CN)
(74) Representative: Lorenz Seidler Gossel Part. mbB
(86) International application number: PCT/CN2025/077056
(87) International publication number: WO 2025/256172

(57) **Abstract**

Disclosed in the present application are a battery and an electric apparatus. The battery comprises battery cells and busbar components, wherein each battery cell comprises a casing and electrode terminals, the casing having a first wall, and the electrode terminals being arranged on the first wall; the busbar components are connected to the electrode terminals, and the busbar components are configured to electrically connect the plurality of battery cells; and each busbar component is provided with an accommodating portion, and at least part of each electrode terminal is accommodated in the accommodating portion. In the direction of thickness of the first wall, the electrode terminals and the busbar components can share part of the space, thereby increasing the space utilization rate and increasing the energy density of the battery.

## Description

### CROSS-REFERENCE TO RELATED APPLICATION

The present application claims priority to Chinese Patent Application No. 202421325232.X, filed on June 11, 2024 and entitled "BATTERY AND ELECTRICAL DEVICE", which is incorporated herein by reference in its entirety.

### TECHNICAL FIELD

The present application relates to the technical field of batteries, and in particular, to a battery and an electrical device.

### BACKGROUND

With the advancement of new energy technologies, batteries are used more and more widely. Due to the high energy density, high reliability, long service life, and social environment friendliness, batteries are now widely used in passenger vehicles, commercial vehicles, electric bicycles, heavy-duty trucks, energy storage facilities, battery swap stations, engineering and manufacturing, smart instruments, etc., while promoting technological development and research in telecommunications, medical instruments, energy development, etc.

In the development of battery technology, how to improve energy density of batteries is an urgent technical problem to be solved.

### SUMMARY

Embodiments of the present application provide a battery and an electrical device, which can increase energy density of the battery effectively.

In a first aspect, embodiments of the present application provide a battery including battery cells and busbar components. Each of the battery cells includes a shell and electrode terminals, the shell has a first wall, and the electrode terminals are disposed on the first wall; and the busbar components are connected to the electrode terminals and configured to achieve electrical connection of a plurality of battery cells; where each of the busbar components is provided with an accommodating portion, and at least a part of each of the electrode terminals is accommodated in the accommodating portion.

In the above technical solution, since each of the busbar components is provided with an accommodating portion and at least a part of each of the electrode terminals is accommodated in the accommodating portion, in a thickness direction of the first wall, the electrode terminals and the busbar components can share part of the space, thereby increasing space utilization and increasing energy density of the battery.

In some embodiments, in the thickness direction of the first wall, the busbar component has a first surface facing the first wall and a second surface facing away from the first wall, and the accommodating portion is a through hole extending through the first surface and the second surface.

In the above technical solution, the accommodating portion is a through hole, which not only reduces the difficulty of preparing the busbar component but also allows the electrode terminal and the busbar component to share the space to the utmost extent in the thickness direction of the first wall, thereby reducing the space occupation in the thickness direction of the first wall.

In some embodiments, the electrode terminal includes a conductive member and a terminal post, the conductive member is disposed on an outer side of the first wall, the terminal post is connected to the conductive member, and at least a part of the conductive member is accommodated in the through hole.

In the above technical solution, the conductive member facilitates uniform current distribution and improves installation stability of the terminal post. Since at least a part of the conductive member is accommodated in the through hole, the conductive member and the busbar component share part of the space, thereby allowing the electrode terminal and the busbar component to share part of the space.
in some embodiments, a wall of the through hole is welded to the conductive member to form a welded portion, and at least a part of the welded portion is exposed on the second surface.

In the above technical solution, since the accommodating portion is a through hole, the accommodating portion of this structure allows the busbar component and the conductive member to be joined by butt welding, thereby improving stability in connection between the busbar component and the conductive member.

In some embodiments, in the thickness direction of the first wall, the conductive member has a third surface facing away from the first wall, the second surface being flush with the third surface.

In the above technical solution, since the second surface is flush with the third surface, the busbar component does not extend beyond the conductive member in the thickness direction of the first wall. This not only avoids increasing the dimension of the battery cell in the thickness direction of the first wall but also improves interface consistency.

In some embodiments, the conductive member includes a body and a boss, the boss is disposed on a side of the body facing away from the first wall, at least a part of the boss is accommodated in the accommodating portion, and the busbar component abuts against the body in the thickness direction of the first wall.

In the above technical solution, the busbar component abuts against the body, so that the body can provide support for the busbar component to improve structural stability of the battery.

In some embodiments, in a direction facing away from the body, the cross-sectional area of the boss gradually decreases along the thickness direction of the first wall and in a direction away from the interior of the shell.

In the above technical solution, the cross-sectional area of the boss gradually decreases along the direction facing away from the body, so that the boss is accommodated in the accommodating portion easily, greatly lowering the difficulty in assembling of the busbar component and the conductive member.

In some embodiments, the diameter of the through hole gradually decreases along the thickness direction of the first wall and in a direction away from the interior of the shell.

In the above technical solution, the shape of the through hole matches the shape of the boss, allowing for a smaller gap between them; the engagement between the boss and the through hole can enhance structural stability of the battery.

In some embodiments, the wall of the through hole is welded to an outer peripheral surface of the boss.

In the above technical solution, the wall of the through hole is welded to the outer peripheral surface of the boss. This lowers the requirements for welding energy, and enables the welding between the busbar component and the conductive member using a device with low welding power.

In some embodiments, the battery cell further includes a protective member and a first insulating member, the first insulating member is disposed between the first wall and the conductive member to insulate the conductive member from the first wall; at least a part of the protective member is disposed between the first insulating member and the conductive member in the thickness direction of the first wall, and the melting point of the protective member is higher than the melting point of the conductive member.

In the above technical solution, the protective member is disposed between the first insulating member and the conductive member, where the melting point of the protective member is higher than the melting point of the conductive member, so that the protective member is less likely to be welded through during the process of welding the conductive member to the busbar component. This mitigates scorching and deformation of the first insulating member, reduces the risk of failure of the first insulating member, and improves reliability of the battery cell.

Furthermore, with the protective member, the thickness of the conductive member may be reduced, thereby decreasing the space occupied by the conductive member in the thickness direction of the first wall and increasing energy density of the battery cell.

In some embodiments, the melting point of the protective member ranges from 1,000°C to 3,000°C.

In the above technical solution, the protective member with a higher melting point is available, which improves the protection effect and further reduces the risk of insulation failure of the first insulating member.

In some embodiments, the material of the protective member includes one of steel, zinc and copper, and the material of the conductive member includes aluminum.

In the above technical solution, the material of the protective member includes one of steel, zinc and copper. These metallic materials give the protective member a high melting point, making it difficult to weld through, thereby improving the protection effect of the protective member to the first insulating member. The material of the conductive member includes aluminum, which can greatly improve the conductivity of the conductive member. Aluminum has a low melting point, which facilitates the connection between the conductive member and the busbar component by welding, thereby improving stability in connection between the conductive member and the busbar component.

In some embodiments, in the thickness direction of the first wall, the protective member has a thickness H₁ and the conductive member has a thickness H₂, which satisfy 1/10≤H₁/H₂≤1/4.

In the above technical solution, when 1/10≤H₁/H₂, the thickness H₁ of the protective member does not account for a small proportion as compared to that of the conductive member, so that the protective member can reduce and mitigate the risk of failure of the first insulating member. When H₁/H₂≤1/4, the thickness H₁ of the protective member does not account for a large proportion as compared to that of the conductive member. In the thickness direction of the first wall, the dimension of the protective member accounts for a small proportion, which has small impact on energy density of the battery cell. Therefore, when 1/10≤H₁/H₂≤1/4, both the energy density and the reliability of the battery cell can be balanced.

In some embodiments, in the thickness direction of the first wall, the thickness H₁ of the protective member satisfies 0.3 mm≤H₁≤1 mm.

In the above technical solution, when 0.3mm≤H₁, the thickness H₁ of the protective member may not be too small, and the protective member is less likely to be welded through. When H₁≤1mm, the thickness H₁ of the protective member may not be too large. In the thickness direction of the first wall, the dimension of the protective member accounts for a small proportion, which has small impact on energy density of the battery cell. Therefore, when 0.3mm≤H₁≤1mm, both the energy density and the reliability of the battery cell can be balanced.

In some embodiments, 0.5mm≤H₁≤0.8mm is satisfied.

In the above technical solution, both the energy density and the reliability of the battery cell can be further balanced, thereby improving performance of the battery cell.

In some embodiments, in the thickness direction of the first wall, the thickness H₂ of the conductive member satisfies 1 mm≤H₂≤2.5 mm.

In the above technical solution, when 1 mm≤H₂, the thickness H₂ of the conductive member may not be too small, sufficient weld penetration is enabled when the conductive member is welded to the busbar component, thereby ensuring stability in connection between the conductive member and the busbar component. When H₂≤2.5mm, the thickness H₂ of the conductive member may not be too large. In the thickness direction of the first wall, the dimension of the conductive member accounts for a small proportion, allowing for a larger internal space within the battery cell to accommodate a larger electrochemical component, thereby increasing energy density of the battery cell. Therefore, when 1mm≤H₂≤2.5mm, both the energy density and the reliability of the battery cell can be balanced.

In some embodiments, 1.5mm≤H₂≤2mm is satisfied.

In the above technical solution, both the energy density and the reliability of the battery cell can be further balanced, thereby improving performance of the battery cell.

In some embodiments, the conductive member has a fourth surface facing the first insulating member, and the protective member is a plating deposited on the fourth surface.

In the above technical solution, the number of components is reduced, and it is not necessary to assemble the protective member separately during assembly of the battery cell, thereby improving assembly efficiency of the battery cell.

In some embodiments, the protective member is connected to the conductive member; or the protective member is connected to the first insulating member.

In the above technical solution, since a combination formed by connecting the protective member to the conductive member or the first insulating member may serve as a prefabricated member, the assembly of the protective member is separated from the assembly process of the battery cell, there is no need to assemble the protective member separately during the assembly of the battery cell, thereby improving assembly efficiency of the battery cell.

In some embodiments, the first insulating member is a plastic part, and the plastic part is injection-molded on the protective member.

In the above technical solution, the plastic part is injection-molded on the protective member to obtain a combination, which is an injection-molded part. Since the injection-molded part may be a prefabricated member, the assembly of the protective member is separated from the assembly process of the battery cell, there is no need to assemble the protective member during the assembly of the battery cell, thereby improving assembly efficiency of the battery cell. Moreover, the plastic part is injection-molded on the protective member using the mature technology, so that production costs can be lowered greatly.

In some embodiments, the protective member is provided with a limiting portion, and the first insulating member is provided with a mating portion that engages with the limiting portion.

In the above technical solution, the limiting portion and the mating portion restrict the movement of the protective member, so that the risk of the protective member moving relative to the first insulating member can be reduced, lowering the risk of failure in protection of the projective member.

In some embodiments, the limiting portion is a protrusion and the mating portion is a recess.

In the above technical solution, the protrusion and recess are engaged with each other to restrict the movement of the protective member relative to the first insulating member.

In some embodiments, the protrusion is disposed at the edge of the projective member, a plurality of protrusions are provided, and the plurality of protrusions are spaced apart along a circumferential direction of the protective member; the first insulating member has a fifth surface facing the protective member, the fifth surface is provided with a plurality of ribs, the plurality of ribs are spaced apart around the protective member, each of the ribs extends along the circumferential direction of the protective member, and one recess is formed between every two adjacent ribs.

In the above technical solution, the ribs can enhance structural strength of the first insulating member, and one recess is formed between every two adjacent ribs to engage with a corresponding protrusion to restrict the movement of the protective member.

In some embodiments, the first insulating member includes a bottom wall and a side wall surrounding the bottom wall, the ribs are disposed at the junction between the bottom wall and the side wall, and a surface of the bottom wall facing the protective member is the fifth surface.

In the above technical solution, the ribs are disposed at the junction between the bottom wall and the side wall, i.e., the ribs are disposed near the side wall, so that the space in the middle area occupied by the bottom wall can be reduced.

In some embodiments, the first insulating member includes a bottom wall and a side wall surrounding the bottom wall, at least a part of the protective member is disposed between the bottom wall and the conductive member, and, in the thickness direction of the first wall, the protective member has a thickness H₁ and the bottom wall has a thickness H₃, which satisfy 1/10≤H₁/H₃≤1/2.

In the above technical solution, when 1/10 ≤H₁/H₃, the thickness H₁ of the protective member does not account for a small proportion as compared to that of the bottom wall, so the protective member can reduce and mitigate the risk of failure of the first insulating member. When H₁/H₃≤1/2, the thickness of the protective member does not account for a large proportion as compared to that of the bottom wall. In the thickness direction of the first wall, the dimension of the protective member accounts for a small proportion, which has small impact on energy density of the battery cell. Therefore, when 1/10≤H₁/H₃≤1/2, both the energy density and the reliability of the battery cell can be balanced.

In some embodiments, the busbar component is welded to the conductive member to form a welded portion, and the busbar component is configured to achieve electrical connection of a plurality of battery cells; and in the thickness direction of the first wall, a projection of the welded portion falls within a projection of the protective member.

In the above technical solution, since the projection of the welded portion falls within the projection of the protective member, the projective member is located between the welded portion and the first insulating member in the thickness direction of the first wall, which can effectively reduce the risk of failure of the first insulating member caused by welding between the conductive member and the busbar member.

In some embodiments, in the thickness direction of the first wall, the busbar component has a thickness H₄ and the conductive member has a thickness H₂, which satisfy 1/3≤H₄/H₂<1.

In the above technical solution, when 1/3≤H₄/H₂, the thickness of the busbar component does not account for a small proportion, so that the busbar component has a high structural strength. When H₄/H₂<1, the thickness of the busbar component does not account for a large proportion, leaving more space for the conductive member and allowing for accommodating a larger conductive member, thereby improving structural strength of the conductive member. Therefore, when 1/3≤H₄/H₂<1, the structural strength of both the busbar component and the conductive member can be balanced.

In some embodiments, the shell includes a case and an end cover, one end of the case forms an opening, the end cover covers the opening, and the end cover serves as the first wall.

In a second aspect, embodiments of the present application provide an electrical device. The electrical device includes the battery according to the embodiments in the first aspect, and the battery is configured to provide electric energy for the electrical device.

### BRIEF DESCRIPTION OF DRAWINGS

In order to describe the technical solutions in the embodiments of the present application more clearly, the following briefly describes the accompanying drawings required for describing the embodiments. It should be appreciated that, the accompanying drawings below only show some embodiments of the present application, and thus should not be considered as a limitation to the scope. A person of ordinary skill in the art may still derive other related drawings from the accompanying drawings without creative efforts.
FIG. 1 is a schematic structural diagram according to some embodiments of the present application;
FIG. 2 is a schematic exploded diagram of a battery according to some embodiments of the present application;
FIG. 3 is a schematic structural diagram of a battery according to some embodiments of the present application;
FIG. 4 is a schematic exploded diagram of a battery cell according to some embodiments of the present application;
FIG. 5 is a schematic diagram showing the assembly of a battery cell and a busbar component according to some embodiments of the present application;
FIG. 6 is a schematic diagram showing the assembly of a first wall, electrode terminals and a busbar component according to some embodiments of the present application;
FIG. 7 is a partial sectional view taken along C-C in FIG. 5;
FIG. 8 is a schematic diagram of a partial structure of the busbar component in FIG. 7;
FIG. 9 is a schematic diagram of a partial structure of the busbar component in FIG. 7, according to some other embodiments;
FIG. 10 is a schematic diagram showing the welding of the busbar component and a conductive member in FIG. 7, according to some embodiments;
FIG. 11 is a schematic diagram of the busbar component and a conductive member in FIG. 7, according to some other embodiments;
FIG. 12 is a schematic structural diagram of a conductive member according to some embodiments of the present application;
FIG. 13 is a schematic structural diagram of a conductive member according to some other embodiments of the present application;
FIG. 14 is a schematic structural diagram of a conductive member and a busbar component according to an embodiment of the present application;
FIG. 15 is a schematic structural diagram of a protective member and a first insulating member according to some embodiments of the present application.

Reference numerals: 100 - battery; 10 - battery cell; 11 - shell; 111 - first wall; 111a - end cover; 112 - case; 12 - electrode assembly; 13 - electrode terminal; 131 - conductive member; 1311 - fourth surface; 1312 - third surface; 1313 - body; 1314 - boss; 1315 - third mounting hole; 132 - terminal post; 14 - protective member; 141 - limiting portion; 142 - first mounting hole; 15 - first insulating member; 151 - bottom wall; 152 - side wall; 153 - fifth surface; 154 - rib; 1541 - mating portion; 155 - second mounting hole; 16 - second insulating member; 17 - sealing member; 20 - box; 21 - first part; 22 - second part; 23 - accommodating space; 30 - busbar component; 31 - first surface; 32 - second surface; 33 - accommodating portion; 34 - positioning hole; 40 - welded portion; 1000 - vehicle; 200 - motor; 300 - controller; Z - thickness direction.

In the drawings, the figures are not drawn to actual scale.

### DETAILED DESCRIPTION OF EMBODIMENTS

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," and the like in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. A person of ordinary skills in the art can understand specific meanings of these terms in the present application based on specific situations.

In the description of the present application, it should be noted that, unless otherwise stated, "a plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms such as "first", "second" and "third" are only for the purpose of description, and shall not be construed as indicating or implying relative importance. "Vertical" is not vertical in the strict sense, but is within the margin of error allowed. "Parallel" is not parallel in the strict sense, but is within the margin of error allowed.

In the present application, the term "or" is only an association relationship for describing associated objects, indicating that there may be two types of relationships, for example, A or B may refer to either the situation where A exists alone or the situation where B exists alone.

In the embodiments of the present application, like reference numerals indicate like components, and for the sake of brevity, detailed description of the same components is omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

"Plurality" appearing in the present application refers to two or more (including two).

In the present application, battery cells may include, but are not limited to, lithium-ion secondary batteries, lithium-ion primary batteries, lithium-sulfur batteries, sodium/lithium-ion batteries, sodium-ion batteries or magnesium-ion batteries, etc. The shape of battery cells may include, but is not limited to, a cylindrical shape, a flat shape, a rectangular shape, or other shapes. Based on packaging methods, battery cells typically include cylindrical cells, prismatic cells, etc.

A battery cell may include electrode assemblies and an electrolyte. Each of the electrode assemblies is composed of a positive electrode plate, a negative electrode plate and a separator. The battery cell works mainly relying on the movement of metal ions between the positive electrode plate and the negative electrode plate. Metal ions (e.g., lithium ions) are repeatedly intercalate into and released from the positive electrode and the negative electrode. The separator is arranged between the positive electrode and the negative electrode, and may play a role in preventing a short circuit between the positive electrode plate and the negative electrode plate to a certain extent, while allowing active ions to pass through.

The positive electrode plate includes a positive electrode current collector and a positive electrode active material layer, a surface of the positive electrode current collector is coated with the positive electrode active material layer, the positive electrode current collector not coated with the positive electrode active material layer protrudes from the positive electrode current collector already coated with the positive electrode active material layer, and the positive electrode current collector not coated with the positive electrode active material layer is used as a positive tab.

Taking a lithium-ion battery as an example, the positive electrode active material may be lithium cobalt oxide, lithium iron phosphate, ternary lithium, lithium manganate, etc. The positive electrode current collector may be a metal foil or a composite current collector. For example, silver-plated aluminum, silver-plated stainless steel, stainless steel, copper, aluminum, nickel, carbon electrode, carbon, nickel, titanium, or the like may be used as the metal foil. The composite current collector may include a polymer material substrate layer and a metal layer. The composite current collector may be formed by forming a metal material (e.g., aluminum, aluminum alloy, nickel, nickel alloy, titanium, titanium alloy, silver, and silver alloy) on the polymer material substrate (e.g., a substrate of polypropylene, polyethylene terephthalate, polybutylene terephthalate, polystyrene, or polyethylene).

The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative tab.

The negative electrode current collector may be a metal foil or a composite current collector. For example, silver-plated aluminum, silver-plated stainless steel, stainless steel, copper, aluminum, nickel, carbon electrode, carbon, nickel, titanium, or the like may be used as the metal foil. The negative electrode active material may be carbon, silicon, or the like.

In order to reduce, to some extent, the risk of fusing of the tabs when a large current passes, there are a plurality of positive tabs which are stacked together, and there are a plurality of negative tabs which are stacked together. A material of the separator may be PP (polypropylene, polypropylene) or PE (polyethylene, polyethylene), or the like. In addition, the electrode assembly may be of a wound structure or a laminated structure.

The battery mentioned in the embodiments of the present application is a single physical module that includes one or more battery cells for providing a higher voltage and capacity. For example, the battery mentioned in the present application may include a battery module, a battery pack, or the like. The battery generally includes a box for packaging one or more battery cells. The box may reduce the impact of liquids or other foreign matters on charging or discharging of the battery cells.

In some embodiments, the battery may be a battery module. When there are a plurality of battery cells, the plurality of battery cells are arranged and fixed to form a battery module.

In some embodiments, the battery may be a battery pack. The battery pack includes a box and a battery cell. The battery cell or the battery module is accommodated in the box.

In some embodiments, a plurality of battery cells may first be integrated into at least one battery module, and the battery module may then be installed in a box to form a battery pack. In this implementation, auxiliary structural components such as crossbeams may also be provided between the battery modules to improve installation stability of the battery modules in the box.

In some embodiments, the box may be a part of a vehicle chassis structure. For example, a part of the box may become at least a part of a vehicle floor, or a part of the box may become at least a part of a cross beam and a longitudinal beam of a vehicle.

In some embodiments, the battery may be an energy storage apparatus. The energy storage apparatus includes an energy storage container, an energy storage electric cabinet, etc.

Many design factors, such as reliability, cycle life, discharge capacity, charge-discharge rate and other performance parameters, should be considered in the development of battery technology. In addition, energy density of the battery also needs to be taken into account.

In battery technology, busbar components are connected to electrode terminals to achieve electrical connection of a plurality of battery cells. The presence of the busbar components takes up space. Particularly in a battery that requires high current flow capacity, the busbar components are larger and accordingly occupy more space, leading to a decrease in energy density of the battery. For example, the busbar components are typically disposed above the electrode terminals. The busbar components occupy the above space of the electrode terminals, so the space available inside the battery cell is reduced, leading to a decrease in energy density of the battery.

In view of this, to address the issue of the decrease in energy density of the battery caused by the space occupation of the busbar components, the embodiments of the present application provide a technical solution. In the technical solution, the electrode terminals are disposed on a first wall of a shell, each of the busbar components is provided with an accommodating portion, and at least a part of each of the electrode terminals is accommodated in the accommodating portion; in a thickness direction of the first wall, the electrode terminals and the busbar components can share part of the space, thereby increasing space utilization and increasing energy density of the battery.

The technical solution disclosed in the embodiments of the present application is applicable to, but not limited to, a battery and an electrical device using the battery.

The electrical device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric vehicle toy, an electric ship toy, an electric airplane toy, and the like. The electric tool includes a an electric metal cutting tool, an electric grinding tool, an electric assembly tool, an electric railway-specific tool, for example, an electric drill, an electric grinder, an electric wrench, an electric screwdriver, an electric hammer, an electric impact drill, a concrete vibrator, and an electric planer.

In the following embodiments, for convenience of description, the electrical device being a vehicle 1000 is taken as an example for illustration.

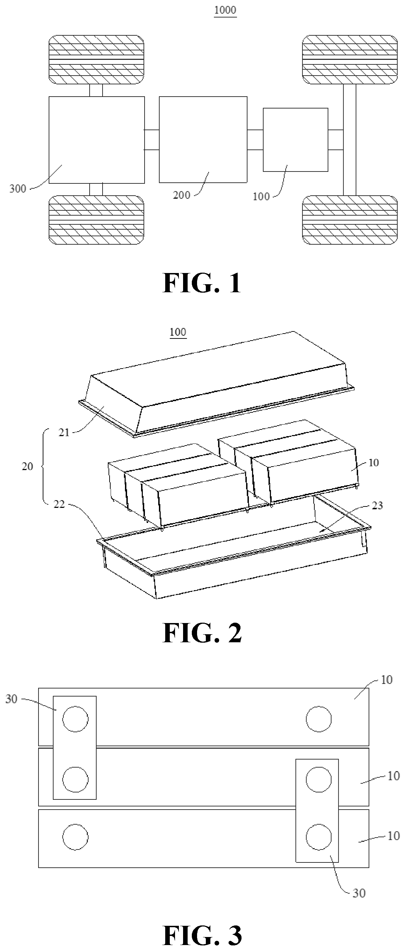

Referring to FIG. 1, which is a schematic structural diagram of a vehicle 1000 according to some embodiments of the present application, the vehicle 1000 is provided with a battery 100 inside, and the battery 100 may be disposed at the bottom or head or tail of the vehicle 1000. The battery 100 may be used as a power supply for the vehicle 1000, for example, the battery 100 may be used as an operating power source for the vehicle 1000.

The vehicle 1000 may further include a controller 300 and a motor 200. The controller 300 is configured to control the battery 100 to supply power to the motor 200, for example, to supply power for starting, navigation and driving of the vehicle 1000.

In some examples of the present application, the battery 100 may not only serve as an operating power source of the vehicle 1000, but also serve as a driving power source of the vehicle 1000, to provide a driving power for the vehicle 1000 in place of or partially in place of fuel or natural gas.

In some embodiments, reference is made to FIGS. 2 and 3, where FIG. 2 is a schematic exploded diagram of a battery 100 according to some embodiments of the present application, and FIG. 3 is a structural view of the battery 100 according to some embodiments of the present application. The battery 100 includes a plurality of battery cells 10. The plurality of battery cells 10 may be connected in series or parallel or series-parallel. Connection in series-parallel means that the plurality of battery cells 10 are connected in both series and parallel.

In some embodiments, the battery 100 may further include busbar components 30. The plurality of battery cells 10 may be electrically connected through the busbar components 30 so as to realize the series connection or parallel connection or series-parallel connection of the plurality of battery cells 10.

The busbar components 30 may be metal conductors, such as copper, iron, aluminum, stainless steel, aluminum alloy.

In some embodiments, the battery 100 may further include a box 20, and the box 20 is configured to accommodate the battery cells 10. The box 20 may include a first part 21 and a second part 22. The first part 21 and the second part 22 cover each other to define an accommodating space 23 for accommodating the battery cells 10. The joint between the first part 21 and the second part 22 may be sealed by means of sealing elements (not shown in the figures), such as an O-ring or a sealant.

Here, the first part 21 and the second part 22 may have a variety of shapes, such as a cuboid shape or a cylinder shape. The first part 21 may be a hollow structure with one side open, and the second part 22 may also be a hollow structure with one side open. The open side of the second part 22 covers the open side of the first part 21 to form the box 20 having the accommodating space 23. Alternatively, the first part 21 may be a hollow structure with one side open, and the second part 22 may be a plate-shaped structure. The open side of the second part 22 covers the open side of the first part 21 to form the box 20 having the accommodating space 23.

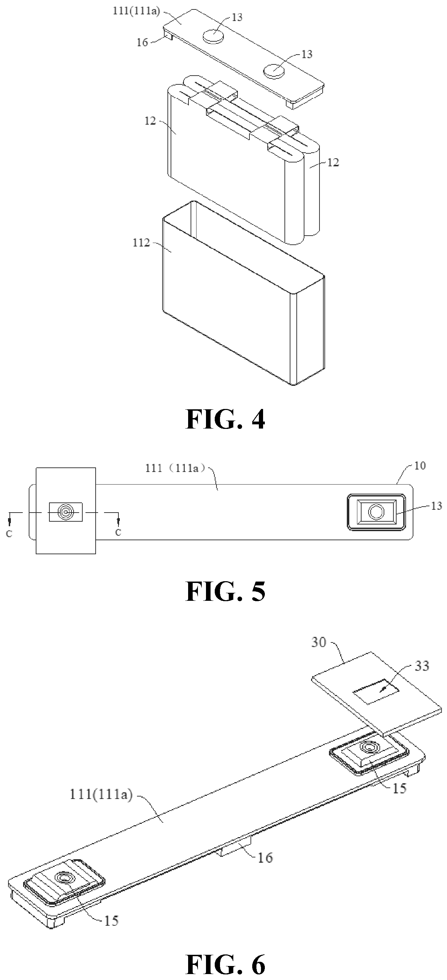

Referring to FIG. 4, which is a schematic exploded diagram of a battery cell 10 according to some embodiments of the present application, the battery cell 10 may include a shell 11, electrode assemblies 12, electrode terminals 13 and other functional components.

In some embodiments, the shell 11 may be of a sealed structure or a non-sealed structure. As an example, when the shell 11 is of a sealed structure, the shell 11 may protect the electrode assemblies 12 and prevent, to some extent, such as electrolyte leakage. When the shell is of a non-sealed structure, it may serve to protect the electrode assemblies. A sealing bag (not shown in the figure) may also be included between the shell 11 and the electrode assemblies 12. The sealing bag is used for encapsulating the electrode assemblies, electrolyte, and the like. Specifically, the sealing bag may be a bag-shaped insulating member or an aluminum-plastic film.

The shell 11 includes a case 112 and an end cover 111a. The case 112 is a component for accommodating the electrode assemblies 12. The case 112 may be of a hollow structure with an opening formed at one end, or the case 112 may be of a hollow structure with openings formed at both ends. The case 112 may be made of various materials, such as copper, iron, aluminum, steel, and aluminum alloy. The case 112 may have various shapes, such as a cylinder shape or a r cuboid shape. For example, in FIG. 3, the case 112 is a cuboid.

The end cover 111a is a component that covers the opening of the case 112 to isolate an internal environment of the battery cell 10 from an external environment thereof. The end cover 111a covers the opening of the case 112. The end cover 111a and the case 112 jointly define an accommodating space for accommodating the electrode assemblies 12, the electrolyte, and other functional components. The shape of the end cover 111a may be matched with the shape of the case 112. For example, if the case 112 is of a cuboid structure, the end cover 111a may be of a rectangular plate-shaped structure matched with the case 112. For another example, if the case 112 is of a cylinder structure, the end cover 111a may be of a circular plate-shaped structure matched with the case 112. The end cover 111a may also be made of various materials, for example, the end cover 111a may be made of a metal material such as copper, iron, aluminum, steel, or aluminum alloy. The material of the end cover 111a may be the same as or different from that of the case 112.

In the battery cell 10, there may be one or two end covers 111a. If the case 112 is of a hollow structure with an opening formed at one end, one end cover 111a is provided correspondingly. If the case 112 is of a hollow structure with openings formed at both ends, two end covers 111a are provided correspondingly. The two end covers 111a cover the two openings in the case 112, respectively.

In some embodiments, there may be two electrode terminals 13. The two electrode terminals 13 may be disposed on the same end cover 111a, or on two end covers 111a respectively.

Embodiments of the present application provide a battery 100, where the energy density of the battery 100 can be increased. The specific structure of the battery 100 will be described in detail below with reference to figures.

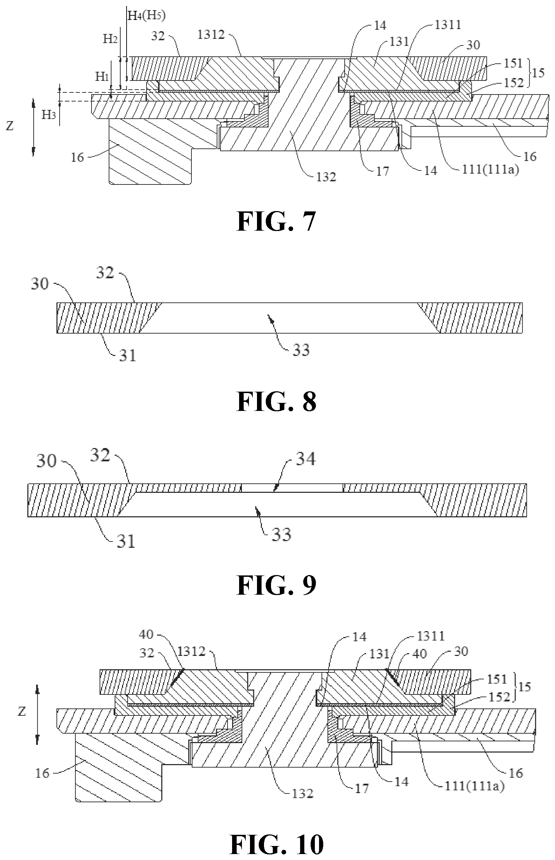

FIG. 5 is a schematic diagram showing the assembly of a battery cell 10 and a busbar component 30 according to some embodiments of the present application; FIG. 6 is a schematic diagram showing the assembly of a first wall 111, electrode terminals 13 and a busbar component 30 according to some embodiments of the present application; FIG. 7 is a partial sectional view taken along C-C in FIG. 5; FIG. 8 is a schematic diagram of a partial structure of the busbar component 30 in FIG. 7; and FIG. 9 is a schematic diagram of a partial structure of the busbar component 30 in FIG. 7, according to some other embodiments.

Referring to FIGS. 5 to 9, embodiments of the present application provide a battery 100. The battery 100 includes battery cells 10 and busbar components 30, and each of the battery cells 10 includes a shell 11 and electrode terminals 13. The shell 11 has a first wall 111, and the electrode terminals 13 are disposed on the first wall 111. The busbar components 30 are connected to the electrode terminals 13. The busbar components 30 are configured to achieve electrical connection of a plurality of battery cells 10. Each of the busbar components 30 is provided with an accommodating portion 33, and at least a part of each of the electrode terminals 13 is accommodated in the accommodating portion 33.

The first wall 111 may serve as the end cover 111a. The first wall 111 may serve as another wall of the case 112. For example, the first wall 111 is a wall of the case 112 opposite the end cover 111a. Optionally, the first wall 111 serves as the end cover 111a.

The electrode terminals 13 are components or assemblies used to draw out current. The electrode terminals 13 may be positive terminals or negative terminals.

The accommodating portion 33 is a region or space of the busbar component 30 for accommodating at least a part of the electrode terminal 13. The accommodating portion 33 may be formed on the busbar component 30 by cutting, stamping or drilling in the later stage, or the accommodating portion 33 may be formed at the same time as the busbar component 30 is formed, thereby eliminating the need for subsequent machining.

The accommodating portion 33 may be constructed as a circle, a rectangle, or an irregular shape, as long as it can accommodate at least a part of a conductive member 131. The shape of the accommodating portion 33 may match the shape of the structure of the conductive member 131 that is accommodated in the accommodating portion 33.

The busbar component 30 has a first surface 31 facing the first wall 111 and a second surface 32 facing away from a second wall. The accommodating portion 33 may have one opening or the accommodating portion 33 may have a plurality of openings. The accommodating portion 33 has at least one opening on the first surface 31 to accommodate at least a part of the conductive member 131.

For example, as shown in FIG. 9, a recess formed by the first surface 31 recessing toward the second surface 32 is an accommodating portion 33. The accommodating portion 33 has an opening on the first surface 31. It can be understood that the accommodating portion 33 extends through the first surface 31.

For example, as shown in FIG. 8, the accommodating portion 33 extends through the first surface 31 and the second surface 32, and the accommodating portion 33 has two openings on the first surface 31 and the second surface 32, respectively.

Of course, in other embodiments, the busbar component 30 has a side surface connecting the first surface 31 and the second surface 32, and the accommodating portion 33 may also extend to the edge of the busbar component 30, that is, at least one opening of the accommodating portion 33 is located on the side surface.

In this embodiment, since each of the busbar components 30 is provided with an accommodating portion 33, and at least a part of each of the electrode terminals 13 is accommodated in the accommodating portion 33, in a thickness direction Z of the first wall 111, the electrode terminals 13 and the busbar components 30 can share part of the space, thereby increasing space utilization and increasing energy density of the battery 100.

Referring to FIG. 8, in some embodiments, in a thickness direction Z of the first wall 111, the busbar component 30 has a first surface 31 facing the first wall 111 and a second surface 32 facing away from the first wall 111, and the accommodating portion 33 is a through hole extending through the first surface 31 and the second surface 32.

The through hole may be constructed as a round hole, a rectangular hole, or a trapezoidal hole.

The accommodating portion 33 is a through hole, which not only reduces the difficulty of preparing the busbar component 30 but also allows the electrode terminals 13 and the busbar component 30 to share the space to the utmost extent in the thickness direction Z of the first wall 111, thereby reducing the space occupation in the thickness direction Z of the first wall 111.

To facilitate the positioning of the busbar component 30 and to identify installation position of the busbar component 30, as shown in FIG. 9, in some embodiments, the accommodating portion 33 is a recess formed on the first surface 31, and a positioning hole 34 is provided at the bottom of the recess, where in a direction perpendicular to the thickness direction Z of the first wall 111, a projection of the positioning hole 34 at least partially overlaps with a projection of the recess. In this way, a terminal post 132 may be observed through the positioning hole 34, making it easy to identify whether the busbar component 30 and the electrode terminal 13 are installed in place.

Unlike FIG. 9, in FIG. 8, the accommodating portion 33 is a through hole, which can serve as both the accommodating portion 33 and the positioning hole 34. Accordingly, the number of openings in the busbar component 30 is reduced.

In some embodiments, the electrode terminal 13 includes a conductive member 131 and a terminal post 132, the conductive member 131 is disposed on an outer side of the first wall 111, the terminal post 132 is connected to the conductive member 131, and at least a part of the conductive member 131 is accommodated in the through hole.

The conductive member 131 can be understood as a conductive metal part used for installation of the terminal post 132. The conductive member 131 is used for connecting the terminal post 132 to the first wall 111 to secure the terminal post 132 to the first wall 111. The conductive member 131 may be constructed in any shape. The material of the conductive member 131 may include, but is not limited to, copper, aluminum, steel and their alloys.

The terminal post 132 may be used for electrical connection with a tab of an electrode assembly 12. The terminal post 132 and the conductive member 131 may be made of the same or different material. In some embodiments, at least a part of the terminal post 132 may also be accommodated in the accommodating portion 33.

Optionally, the conductive member 131 is a riveting block, and the terminal post 132 is riveted to the conductive member 131.

In this embodiment, the conductive member 131 facilitates uniform current distribution and improves installation stability of the terminal post 132. Since at least a part of the conductive member 131 is accommodated in the through hole, the conductive member 131 and the busbar component 30 share part of the space, thereby allowing the electrode terminal 13 and the busbar component 30 to share part of the space.

In some embodiments, the conductive member 131 is welded to the busbar component 30 to improve stability in connection between the conductive member 131 and the busbar component 30.

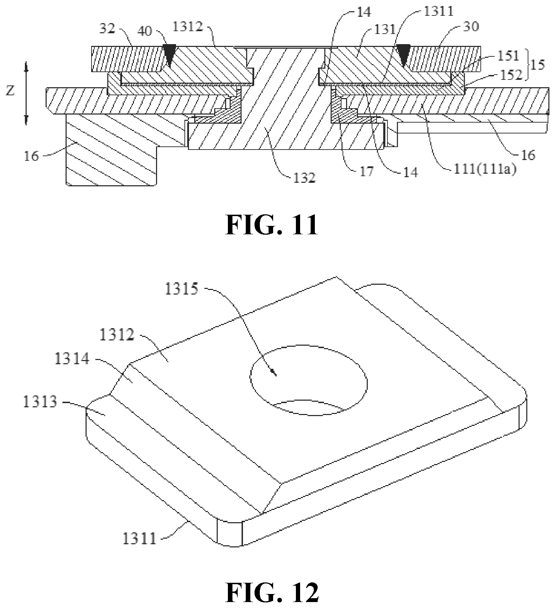

FIG. 10 is a schematic diagram showing the welding of the busbar component 30 and the conductive member 131 in FIG. 7, according to some embodiments. FIG. 11 is a schematic diagram showing the welding of the busbar component 30 and the conductive member 131 in FIG. 7, according to some other embodiments.

Referring to FIGS. 10 and 11, in some embodiments, a wall of the through hole is welded to the conductive member 131 to form a welded portion 40, and at least a part of the welded portion 40 is exposed on the second surface 32.

The wall of the through hole can be understood as an inner peripheral surface of the accommodating portion 33.

Welding methods include, but are not limited to, keyhole welding, butt welding, etc. Optionally, as shown in FIG. 10, the busbar component 30 and the conductive member 131 are subjected to butt welding.

In this embodiment, since the accommodating portion 33 is a through hole, the accommodating portion 33 of this structure allows the busbar component 30 and the conductive member 131 to be joined by butt welding, thereby improving the stability in connection between the busbar component 30 and the conductive member 131.

In some embodiments, in the thickness direction Z of the first wall 111, the conductive member 131 has a third surface 1312 facing away from the first wall 111, where the second surface 32 does not extend beyond the third surface 1312. In this way, based on the conductive member 131, the busbar component 30 does not occupy additional space in the thickness direction Z of the first wall 111. This is conducive to increasing energy density of the battery 100.

In some embodiments, in the thickness direction Z of the first wall 111, the conductive member 131 has a third surface 1312 facing away from the first wall 111, the second surface 32 being flush with the third surface 1312.

It can be understood that the second surface 32 and the third surface 1312 are coplanar.

The second surface 32 is flush with the third surface 1312, and the busbar component 30 does not extend beyond the conductive member 131 in the thickness direction Z of the first wall 111. This not only avoids increasing the dimension of the battery cell 10 in the thickness direction Z of the first wall 111 but also improves interface consistency.

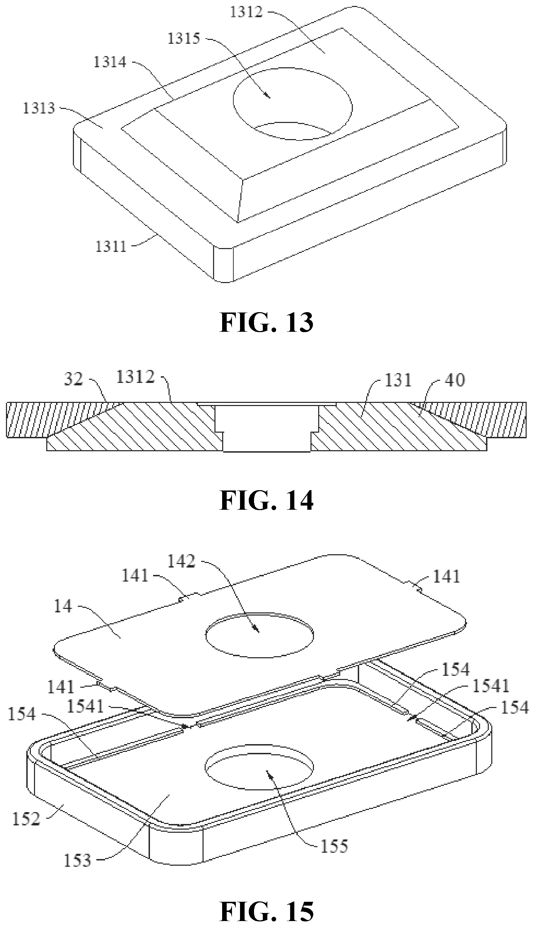

FIG. 12 is a schematic structural diagram of a conductive member 131 according to some embodiments of the present application; FIG. 13 is a schematic structural diagram of a conductive member 131 according to some other embodiments of the present application.

Referring to FIGS. 12, 13 and 7, in some embodiments, the conductive member 131 includes a body 1313 and a boss 1314, the boss 1314 is disposed on a side of the body 1313 facing away from the first wall 111, at least a part of the boss 1314 is accommodated in the accommodating portion 33, and the busbar component 30 abuts against the body 1313 in the thickness direction Z of the first wall 111.

The boss 1314 may extend to the edge of the body 1313. The boss 1314 may not extend to the edge of the body 1313 (as shown in FIG. 13). The boss 1314 may also partially extend to the edge of the body 1313 (as shown in FIG. 12). The boss 1314 and the body 1313 may have various shapes. For example, the boss 1314 is trapezoidal.

In this embodiment, the busbar component 30 abuts against the body 1313, so that the body 1313 can provide support for the busbar component 30 to improve structural stability of the battery 100.

In other embodiments, the body 1313 may not be provided to support the busbar component 30. Reference is made to FIG. 14. FIG. 14 is a schematic structural diagram of a conductive member 131 and a busbar component 30 according to an embodiment of the present application. In some embodiments, the busbar component 30 is disposed directly around the outer periphery of the conductive member 131. The conductive member 131 may be a cuboid, a trapezoid, or the like. The conductive member 131 has a side surface that connects the first surface 31 and the second surface 32. If the guide member is a cuboid, the side surface of the conductive member 131 is a straight surface. If the guide member is a trapezoid (as shown in FIG. 14), the side surface of the conductive member 131 is an inclined surface.

Referring to FIG. 7, in some embodiments, in the thickness direction Z of the first wall 111, the busbar component 30 has a thickness H₄ and the conductive member has a thickness H₂, which satisfy 1/3≤H₄/H₂<1.

The thickness H₄ of the busbar component 30 can be understood as a distance at the thickest point of the busbar component in the thickness direction Z of the first wall 111.

The thickness H₂ of the conductive member 131 can be understood as a maximum distance between the third surface 1312 and a surface of the body 1313 facing away from the boss 1314 in the thickness direction Z of the first wall 111.

H₄/H₂ is a thickness ratio of the busbar component 30 to the conductive member 131.

For example, H₄/H₂ may be equal to 1/3, 10/29, 10/27, 5/13, 2/5, 5/12, 1/2, 2/3, 1, or any value between them.

When 1/3≤H₄/H₂, the thickness of the busbar component 30 does not account for a small proportion, so that the busbar component 30 has a high structural strength. When H₄/H₂<1, the thickness of the busbar component 30 does not account for a large proportion, leaving more space for the conductive member 131 and allowing for accommodating a larger conductive member 131, thereby improving structural strength of the conductive member 131. Therefore, when 1/3≤H₄/H₂<1, the structural strength of both the busbar component 30 and the conductive member 131 can be balanced.

Referring to FIG. 7, in some embodiments, in the thickness direction Z of the first wall 111, the boss 1314 has a thickness H₅ and the conductive member has a thickness H₂, which satisfy 1/3≤H₄/H₂<1.

The thickness H₄ of the boss can be understood as a maximum distance between the third surface 1312 and the body 1313 in the thickness direction Z of the first wall 111.

H₅/H₂ is a thickness ratio of the boss 1314 to the conductive member 131.

For example, H₄/H₂ may be equal to 1/3, 10/29, 10/27, 5/13, 2/5, 5/12, 1/2, 2/3, 1, or any value between them.

When 1/3≤H₅/H₂, the thickness of the boss 1314 may not be too small; thus, in the thickness direction Z of the first wall 111, the conductive member 131 can share the space with the busbar component 30 as much as possible, thereby increasing energy density of the battery 100. When H₅/H₂<1, the thickness of the boss 1314 may not be too large, allowing the body 1313 to have a large thickness, thereby providing strong support for the busbar component 30 and improving structural stability of the battery 100. Therefore, when 1/3≤H₅/H₂<1, both the energy density and the reliability of the battery 100 can be balanced.

In some embodiments, in the thickness direction Z of the first wall 111, the thickness of the busbar component 30 may be the same as or different from the thickness of the boss 1314. For example, as shown in FIG.7, the thickness of the busbar component 30 is the same as the thickness of the boss 1314.

In some embodiments, in the thickness direction Z of the first wall 111, the thickness of the busbar component 30 may range from 0.5 mm to 3.5 mm. This allows for a busbar component 30 that has high current flow capacity and that is not too thick.

For example, the thickness of the busbar component 30 may be 0.5 mm, 0.9 mm, 1 mm, 1.2 mm, 1.5 mm, 1.7 mm, 1.9 mm, 2 mm, 2.4 mm, 2.5 mm, 2.7 mm, 2.8 mm, 3.1 mm, 3.4 mm, 3.5 mm, or any value between them.

Furthermore, in the thickness direction Z of the first wall 111, the thickness of the busbar component 30 may range from 1.5 mm to 2.5 mm.

For example, the thickness of the busbar component 30 may be 1.5 mm, 1.6 mm, 1.7 mm, 1.8 mm, 1.9 mm, 2 mm, 2.1 mm, 2.2 mm, 2.3 mm, 2.4 mm, 2.5 mm, or any value between them.

In some embodiments, the cross-sectional area of the boss 1314 gradually decreases along the thickness direction Z of the first wall 111 and in a direction away from the interior of the shell 11.

It can be understandable that the boss 1314 gradually decreases in size along the direction facing away from the body 1313.

The cross-sectional area of the boss 1314 refers to the area of the section of the boss 1314 that is perpendicular to the thickness direction Z of the first wall 111. If the boss 1314 is a cuboid, then its section is a rectangle, and the area of the rectangle is the cross-sectional area of the boss 1314. If the boss 1314 is a cylinder, then its section is a circle, and the area of the circle is the cross-sectional area of the boss 1314. If the boss 1314 is a trapezoid, then its section is a rectangle, and the area of the rectangle is the cross-sectional area of the boss 1314.

In this embodiment, the cross-sectional area of the boss 1314 gradually decreases along the direction facing away from the body 1313, so that the boss 1314 is accommodated in the accommodating portion 33 easily, greatly lowering the difficulty in assembling of the busbar component 30 and the conductive member 131.

In some embodiments, the cross-sectional area of the boss 1314 gradually decreases and the diameter of the through hole also gradually decreases, along the thickness direction Z of the first wall 111 and in a direction away from the interior of the shell 11.

The shape of the through hole matches the shape of the boss 1314, allowing for a smaller gap between the through hole and the boss 1314; the engagement between the boss 1314 and the through hole can enhance structural stability of the battery 100.

Referring to FIGS. 12 and 13, and in conjunction with FIGS. 10 and 11, in some embodiments, the cross-sectional area of the boss 1314, as well as the diameter of the through hole, gradually decreases along the direction facing away from the first wall 111, and the wall of the through hole is welded to the outer peripheral surface of the boss 1314.

The outer peripheral surface of the boss 1314 can be understood as a side surface of the boss 1314.

It should be understood that, compared to a distance between the first surface 31 and the second surface 32 (the thickness of the busbar component 30), a distance between the wall of the through hole and the second surface 32 is smaller, and the material of the busbar component 30 is thinner at the through hole. At this position, whether keyhole welding or butt welding is used, the requirement for weld depth can be reduced. This ensures that the welding of the busbar component 30 to the conductive member 131 is not limited by the thickness of the busbar component 30, allowing the busbar component 30 to be thicker to improve the current flow capacity.

The wall of the through hole is welded to the outer peripheral surface of the boss 1314. This lowers the requirements for welding energy, and enables the welding between the busbar component 30 and the conductive member 131 using a device with low welding power.

Referring to FIGS. 7, 10 and 11, in some embodiments, the battery cell 10 further includes a protective member 14 and a first insulating member 15, the first insulating member 15 is disposed between the first wall 111 and the conductive member 131 to insulate the conductive member 131 from the first wall 111; at least a part of the protective member 14 is disposed between the first insulating member 15 and the conductive member 131 in the thickness direction Z of the first wall 111, and the melting point of the protective member 14 is higher than the melting point of the conductive member 131.

The first insulating member 15 is a component that electrically insulates the conductive member 131 from the first wall 111 to prevent the battery cell 10 from short circuits or accidental discharge. The material of the first insulating member 15 includes, but is not limited to, polyphenylene oxide, polyphenylene sulfide, polycarbonate, and resins. Optionally, the first insulating member 15 is an upper plastic part.

The protective member 14 is used to isolate welding energy in the process of welding the conductive member 131 to the busbar component 30, thereby protecting the first insulating member 15 from scorching and deformation, or minimizing such scorching and deformation. It can be understood that the protective member 14 is made of a high-temperature resistant material. The protective member 14 may be made of a metal or non-metal material. The protective member 14 may be a plating deposited on a surface of the conductive member 131 or the first insulating member 15, or the protective member 14 may be a relatively independent component. The protective member 14 may be constructed in any shape, as long as it can protect the first insulating member 15 from being scorched by welding energy or minimize such scorching in the process of welding the busbar component 30 to the conductive member 131.

The fact that the melting point of the protective member 14 is greater than the melting point of the conductive member 131 means that the protective member 14 is more resistant to high temperature than the conductive member 131, and the protective member 14 requires a higher temperature to soften and become liquid. Compared to the conductive member 131, the protective member 14 is less likely to be penetrated by welding energy.

The melting point of the protective member 14 may be fixed or not. If the melting point of protective member 14 is fixed, then the temperature at which the protective member 14 becomes a liquid is the melting point of the protective member 14; if the melting point of the protective member 14 is not fixed, then the minimum temperature at which the protective member 14 begins to soften within a certain temperature range may be regarded as the melting point of the protective member 14.

The material of the protective member 14 includes, but is not limited to, steel, zinc, copper and their alloys, as long as the melting point of the protective member 14 is higher than that of the conductive member 131.

The thickness direction Z of the first wall 111 may be parallel to a welding direction. The thickness direction Z of the first wall 111 may also form a certain angle with the welding direction. Optionally, the welding direction is aligned to the thickness direction Z of the first wall 111.

The protective member 14 may be partially disposed between the first insulating member 15 and the conductive member 131.The protective member 14 may also be disposed entirely between the first insulating member 15 and the conductive member 131. When the busbar component 30 is welded to the conductive member 131 along the welding direction, the part of the protective member 14 disposed between the first insulating member 15 and the conductive member 131 can alleviate the transfer of welding energy to the first insulating member 15 in the welding direction, thereby reducing the risk of scorching and deformation of the first insulating member 15.

In this embodiment, the protective member 14 is disposed between the first insulating member 15 and the conductive member 131, where the melting point of the protective member 14 is higher than the melting point of the conductive member 131, the protective member 14 is less likely to be welded through during the process of welding the conductive member 131 to the busbar component 30. This mitigates scorching and deformation of the first insulating member 15, reduces the risk of failure of the first insulating member 15, and improves reliability of the battery cell 10.

Furthermore, with the protective member 14, the thickness of the conductive member 131 may be reduced, thereby decreasing the space occupied by the conductive member 131 in the thickness direction Z of the first wall 111 and increasing energy density of the battery cell 10.

In some embodiments, the melting point of the protective member 14 ranges from 1,000°C to 3,000°C. As the melting point is higher than the common welding temperature, the protective member 14 with a higher melting point is available, which improves the protection effect and further reduces the risk of insulation failure of the first insulating member 15.

For example, the melting point of the protective member 14 may be 1000°C, 1200°C, 1500°C, 1700°C, 2000°C, 2100°C, 2500°C, 2800°C, 3000°C, or any value between them.

In some embodiments, both the protective member 14 and the conductive member 131 are made of metal materials.

In some embodiments, the material of the protective member 14 includes one of steel, zinc and copper, and the material of the conductive member 131 includes aluminum.

The material of the protective member 14 includes one of steel, zinc and copper. These metallic materials give the protective member 14 a high melting point, making the protective member 14 difficult to weld through, thereby improving the protection effect of the protective member 14 to the first insulating member 15. The material of the conductive member 131 includes aluminum, which can greatly improve the conductivity of the conductive member 131. Aluminum has a low melting point, which facilitates the welding between the conductive member 131 and the busbar component 30, thereby improving stability in connection between the conductive member 131 and the busbar component 30.

Referring to FIG. 7, in some embodiments, in the thickness direction Z of the first wall 111, the protective member 14 has a thickness H₁ and the conductive member 131 has a thickness H₂, which satisfy 1/10≤H₁/H₂≤1/4.

If the protective member 14 is a plating, then H₁ can be understood as a thickness of the plating. If the protective member 14 is a separate component, then H₁ can be understood as a thickness of the component. H₁ represents a distance between two surfaces of the protective member 14 in the thickness direction Z of the first wall 111. The two surfaces of the protective member 14 in the thickness direction Z of the first wall 111 can be understood as two reference surfaces. If one of the reference surfaces has a groove, H₁ represents a distance between the area outside the groove and the other reference surface. If one of the reference surfaces has a protrusion, H₁ represents a distance between the area outside the protrusion and the other reference surface.

H2 represents a distance between two surfaces of the conductive member 131 in the thickness direction Z of the first wall 111. In an embodiment where the conductive member 131 is disposed on the top of the shell 11, the thickness H₂ of the conductive member 131 can be understood as a height of the conductive member 131. In an embodiment where the conductive member 131 includes the body 1313 and the boss 1314, H₂ can be understood as the sum of the thickness of the body 1313 and the thickness of the boss 1314.

H₁/H₂ can be understood as a thickness ratio of the protective member 14 to the conductive member 131. For example, H₁/H₂ may be equal to 1/10, 1/9, 1/8, 1/7, 1/6, 1/5, 1/4, or any value between them.

When 1/10≤H₁/H₂, the thickness H₁ of the protective member 14 does not account for a small proportion as compared to that of the conductive member 131, so that the protective member 14 can reduce and mitigate the risk of failure of the first insulating member 15. When H₁/H₂≤1/4, the thickness H₁ of the protective member 14 does not account for a large proportion as compared to that of the conductive member 131. In the thickness direction Z of the first wall 111, the dimension of the protective member 14 accounts for a small proportion, which has small impact on energy density of the battery cell 10. Therefore, when 1/10≤H₁/H₂≤1/4, both the energy density and the reliability of the battery cell 10 can be balanced.

In some embodiments, in the thickness direction Z of the first wall 111, the thickness H₁ of the protective member 14 satisfies 0.3 mm≤H₁≤1 mm.

For example, H₁ may be 0.3 mm, 0.4 mm, 0.5 mm, 0.6 mm, 0.7 mm, 0.8 mm, 0.9 mm, 1 mm, or any value between them.

When 0.3mm≤H₁, the thickness H₁ of the protective member 14 may not be too small, and the protective member 14 is less likely to be welded through. When H₁≤1mm, the thickness H₁ of the protective member 14 may not be too large. In the thickness direction Z of the first wall 111, the dimension of the protective member 14 accounts for a small proportion, which has small impact on energy density of the battery cell 10. Therefore, when 0.3mm≤H₁≤1mm, both the energy density and the reliability of the battery cell 10 can be balanced.

In some embodiments, 0.5mm≤H₁≤0.8mm is satisfied. Both the energy density and the reliability of the battery cell 10 can be further balanced, thereby improving performance of the battery cell 10.

For example, H₁ may be 0.5 mm, 0.55 mm, 0.6 mm, 0.65 mm, 0.7 mm, 0.75 mm, 0.8 mm, or any value between them.

With continued reference to FIG. 7, in some embodiments, in the thickness direction Z of the first wall 111, the thickness H₂ of the conductive member 131 satisfies 1 mm≤H₂≤2.5 mm.

For example, H₂ may be 1 mm, 1.2 mm, 1.4 mm, 1.7 mm, 1.9 mm, 2 mm, 2.1 mm, 2.2 mm, 2.4 mm, 2.5 mm, or any value between them.

When 1 mm≤H₂, the thickness H₂ of the conductive member 131 may not be too small, sufficient weld penetration is enabled when the conductive member 131 is welded to the busbar component 30, thereby ensuring stability in connection between the conductive member 131 and the busbar component 30. When H₂≤2.5mm, the thickness H₂ of the conductive member 131 may not be too large. In the thickness direction Z of the first wall 111, the dimension of the conductive member 131 accounts for a small proportion, allowing for a larger internal space within the battery cell 10 to accommodate a larger electrode assembly 12, thereby increasing energy density of the battery cell 10. Therefore, when 1mm≤H₂≤2.5mm, both the energy density and the reliability of the battery cell 10 can be balanced.

In some embodiments, 1.5mm≤H₂≤2mm is satisfied.

For example, H₂ may be 1.5 mm, 1.6 mm, 1.7 mm, 1.8 mm, 1.9 mm, 2 mm, or any value between them.

In the above technical solution, both the energy density and the reliability of the battery cell 10 can be further balanced, thereby improving performance of the battery cell 10.

Referring to FIGS. 7, 12 and 13, in some embodiments, the conductive member 131 has a fourth surface 1311 facing the first insulating member 15, and the protective member 14 is a plating deposited on the fourth surface 1311.

The plating may be deposited by electroplating or chemical plating. For example, the plating is formed on the fourth surface 1311 by galvanization.

In this embodiment, since the protective member 14 is a plating, the number of components is reduced, and there is no need to assemble the protective member 14 separately during assembly of the battery cell 10, thereby improving assembly efficiency of the battery cell 10.

In an embodiment where the protective member 14 is a separate component, there may be various methods of connecting the protective member 14 to other components, as described in detail below.

In some embodiments, the protective member 14 is connected to the conductive member 131.

The method of connecting the protective member 14 to the conductive member 131 may include, but is not limited to, bonding, welding, pressing, snap-fitting, etc.

Optionally, the protective member 14 and the conductive member 131 are connected by cold pressing or hot pressing, to ensure a tight connection between the conductive member 131 and the protective member 14, thereby reducing the gap between the conductive member 131 and the protective member 14 and lowering the risk of cold solder joints at the gap between the busbar component 30 and the conductive member 131.

A combination formed by connecting the protective member 14 to the conductive member 131 may serve as a prefabricated member. Since the assembly of the protective member 14 is separated from the assembly process of the battery cell 10, there is no need to assemble the protective member 14 during the assembly of the battery cell 10, thereby improving assembly efficiency of the battery cell 10.

In some embodiments, the protective member 14 is connected to the first insulating member 15.

The method of connecting the protective member 14 to the first insulating member 15 may include, but is not limited to, bonding, snap-fitting, etc.

A combination formed by connecting the protective member 14 to the first insulating member 15 may serve as a prefabricated member. Since the assembly of the protective member 14 is separated from the assembly process of the battery cell 10, there is no need to assemble the protective member 14 during the assembly of the battery cell 10, thereby improving assembly efficiency of the battery cell 10.

In some embodiments, the first insulating member 15 is a plastic part, and the plastic part is injection-molded on the protective member 14.

The plastic part is injection-molded on the protective member 14 to form a combination, which is an injection-molded part. Since the injection-molded part may be a prefabricated member, the assembly of the protective member 14 is separated from the assembly process of the battery cell 10,there is no need to assemble the protective member 14 during the assembly of the battery cell 10, thereby improving assembly efficiency of the battery cell 10. Moreover, the plastic part is injection-molded on the protective member 14 using the mature technology, so that production costs can be lowered greatly.

FIG. 15 is a schematic structural diagram of a protective member 14 and a first insulating member 15 according to some embodiments of the present application.

Referring to FIG. 15, the protective member 14 is provided with a limiting portion 141, and the first insulating member 15 is provided with a mating portion 1541 that engages with the limiting portion 141.

The limiting portion 141 may be disposed on a side of the protective member 14 facing the first insulating member 15. The limiting portion 141 may also be disposed at the edge of the protective member 14.

The limiting portion 141 may be a protrusion or a recess. If the limiting portion 141 is a protrusion, then the mating portion 1541 is a corresponding recess. If the limiting portion 141 is a recess, then the mating portion 1541 is a corresponding protrusion.

In this embodiment, the limiting portion 141 and the mating portion 1541 restrict the movement of the protective member 14, so that the risk of the protective member 14 moving relative to the first insulating member 15 can be reduced, lowering the risk of failure in protection of the projective member 14.

Optionally, referring to FIG. 15, in some embodiments, the limiting portion 141 is a protrusion and the mating portion 1541 is a recess.

At least a part of the protrusion is accommodated in the recess. In terms of shape, an outer peripheral surface of the protrusion may match an inner surface of the recess. One or more protrusions may be provided.

The protrusion and recess are engaged with each other to restrict the movement of the protective member 14 relative to the first insulating member 15. Furthermore, the protrusion can improve structural strength of the protective member 14.

In some embodiments, the protrusion is disposed at the edge of the protective member 14, a plurality of protrusions are provided, and the plurality of protrusions are spaced apart in a circumferential direction of the protective member 14. The first insulating member 15 has a fifth surface 153 facing the protective member 14, the fifth surface 153 is provided with a plurality of ribs 154, the plurality of ribs 154 are spaced apart around the protective member 14, each of the ribs 154 extends along the circumferential direction of the protective member 14, and one recess is formed between every two adjacent ribs 154.

At least a part of the protective member 14 is disposed between the fifth surface 153 and the conductive member 131.

The protective member 14 includes two surfaces along its thickness direction Z and a side surface connecting the two surfaces, and the protrusion may protrudes on the side surface.

The number of protrusions may be set according to specific needs. The number of protrusions may include, but is not limited to, two, three, four, and the like. For example, in FIG. 15, the protective member 14 is a rectangular plate. Four protrusions are provided and are disposed at four edges of the rectangular plate, respectively.

The ribs 154 and the bottom wall 151 may be formed integrally, or the ribs 154 and the bottom wall 151 may be separately constructed and then connected together. Optionally, the ribs 154 and the bottom wall 151 are integrally formed.

The ribs 154 may be strip-shaped. The ribs 154 may extend along a straight line or extend in a racetrack shape, etc. The cross section of each rib 154 may be trapezoidal, triangular, rectangular, etc.

In this embodiment, the ribs 154 can enhance structural strength of the first insulating member 15, and one recess is formed between every two adjacent ribs 154 to engage with a corresponding protrusion to restrict the movement of the protective member 14.

In some embodiments, the first insulating member 15 includes a bottom wall 151 and a side wall 152 surrounding the bottom wall 151, the ribs 154 are disposed at the junction between the bottom wall 151 and the side wall 152, and a surface of the bottom wall 151 facing the protective member 14 is the fifth surface 153.

At least a part of the protective member 14 is disposed between the bottom wall 151 and the conductive member 131.

Optionally, the ribs 154, the bottom wall 151 and the side wall 152 are integrally formed.

The ribs 154 may be connected to both the bottom wall 151 and the side wall 152. The ribs 154 may also be disconnected to the side wall 152, for example, there is a certain gap between the ribs 154 and the side wall 152.

In this embodiment, the ribs 154 are disposed at the junction between the bottom wall 151 and the side wall 152, i.e., the ribs 154 are disposed near the side wall 152, so that the space in the middle area occupied by the bottom wall 151 can be reduced.

In some embodiments, in order to improve the protection effect, at least a part of the protective insulating member 14 may be disposed between the side wall 152 and the conductive member 131.

In some embodiments, referring to FIG. 7, in the thickness direction Z of the first wall 111, the bottom wall 151 has a thickness H₃, where 1/10≤H₁/H₃≤1/2 is satisfied.

H₁/H₃ can be understood as a thickness ratio of the protective member 14 to the bottom wall 151 of the first insulating member 15.

For example, H₁/H₃ may be equal to 1/10, 1/9, 1/8, 1/7, 1/6, 1/5, 1/4, 1/3, 1/2, or any value between them.

When 1/10≤H₁/H₃, the thickness H₁ of the protective member 14 does not account for a small proportion as compared to that of the bottom wall 151, so that the protective member 14 can reduce and mitigate the risk of failure of the first insulating member 15. When H₁/H₃≤1/2, the thickness H₁ of the protective member 14 does not account for a large proportion as compared to that of the bottom wall 151. In the thickness direction Z of the first wall 111, the dimension of the protective member 14 accounts for a small proportion, which has small impact on energy density of the battery cell 10. Therefore, when 1/10≤H₁/H₃≤1/2, both the energy density and the reliability of the battery cell 10 can be balanced.

In some embodiments, the busbar component 30 is welded to the conductive member 131 to form a welded portion 40, and the busbar component 30 is configured to achieve electrical connection of a plurality of battery cells 10; and in the thickness direction Z of the first wall 111, a projection of the welded portion 40 falls within a projection of the protective member 14.

The method of welding the busbar component 30 to the conductive member 131 may include keyhole welding, butt welding, etc. The keyhole welding includes, but is not limited to, laser keyhole welding, arc keyhole welding, electron-beam keyhole welding, etc.

Since the projection of the welded portion 40 falls within the projection of the protective member 14, the projective member 14 is located between the welded portion 40 and the first insulating member 15 in the thickness direction Z of the first wall 111, which can effectively reduce risk of failure of the first insulating member 15 caused by welding between the conductive member 131 and the busbar member 30.

In some embodiments, the shell 11 includes a case 112 and an end cover 111a, one end of the case 112 forms an opening, the end cover 111a covers the opening, and the end cover 111a serves as the first wall 111.

Embodiments of the present application further provide an electrical device. The electrical device includes the battery 100 according to the embodiments in the first aspect, and the battery 100 is configured to provide electric energy for the electrical device.

Referring to FIGS. 3 to 13 and FIG. 15, embodiments of the present application further provide a battery 100, where the battery 100 includes busbar components 30 and battery cells 10, and the busbar components 30 are configured to achieve electrical connection of a plurality of battery cells 10. Each of the battery cells 10 includes a shell 11, electrode terminals 13, a protective member 14, a first insulating member 15, a second insulating member 16, and a sealing member 17. The shell 11 includes a case 112 and an end cover 111a, one end of the case 112 forms an opening, and the end cover 111a covers the opening. The electrode terminals 13 are mounted on the end cover 111a. Each of the electrode terminals 13 includes a conductive member 131 and a terminal post 132. The conductive member 131 is mounted on the end cover 111a, and the terminal post 132 is riveted to the conductive member 131. The conductive member 131 includes a body 1313 and a boss 1314. The boss 1314 is disposed on a side of the body 1313 facing away from the first wall 111. The thickness of the boss 1314 is equal to the thickness of the busbar component 30. The busbar component 30 is provided with an accommodating portion 33. The busbar component 30 has a first surface 31 facing the end cover 111a and a second surface 32 facing away from the first wall 111. The accommodating portion 33 is a through hole extending through the first surface 31 and the second surface 32. The boss 1314 is accommodated in the through hole, and the busbar component 30 abuts against the body 1313 in a thickness direction Z of the first wall 111. Along a direction facing away from the first wall 111, the cross-sectional area of the boss 1314 gradually decreases, the diameter of the through hole gradually decreases; and a wall of the through hole and an outer peripheral surface of the boss 1314 are welded to form a welded portion 40, and at least a part of the welded portion 40 is exposed on the second surface 32. In the thickness direction Z of the first wall 111, the conductive member 131 has a third surface 1312 facing away from the first wall 111, the second surface 32 being flush with the third surface 1312. The first insulating member 15 is disposed between the end cover 111a and the conductive member 131 to insulate the conductive member 131 from the end cover 111a. The first insulating member 15 includes a bottom wall 151 and a side wall 152 surrounding the bottom wall 151. In the thickness direction Z of the first wall 111, the busbar component 30 also abuts against the side wall 152, and the protective member 14 is disposed between the bottom wall 151 and the body 1313. The protective member 14 is made of steel, and the conductive member 131 is made of aluminum. The bottom wall 151 has a fifth surface 153 facing the protective member 14, the fifth surface 153 is provided with four ribs 154, the four ribs 154 are spaced apart around the protective member 14, each of the ribs 154 extends along a circumferential direction of the protective member 14, and one recess is formed between every two adjacent ribs 154. The first insulating member 15 is an upper plastic part. The ribs 154, the bottom wall 151 and the side wall 152 are integrally formed. Four protrusions are disposed at edges of the protective member 14, and are spaced apart along the circumferential direction of the protective member 14. The protrusions correspond to the recesses one by one. At least a part of each of the protrusions is accommodated in a corresponding recess. In a thickness direction Z of the end cover 111a, the thickness of the protective member 14 ranges from 0.5 mm and 0.8 mm, and the thickness of the conductive member 131 ranges from 1.5 mm and 2.5 mm. The end cover 111a is provided with a mounting hole. The terminal post 132 passes through the mounting hole of the end cover 111a. The sealing member 17 is disposed in the mounting hole and surrounds the terminal post 132. The sealing member 17 is an insulating member. The second insulating member 16 is disposed on an inner surface of the end cover 111a. The inner surface of the end cover 111a is a side facing the interior of the battery cell 10. The conductive member 131 is provided with a third mounting hole 1315. The third mounting hole 1315 extends through the body 1313 and the boss 1314. The protective member 14 is provided with a first mounting hole 142. The first insulating member 15 is provided with a second mounting hole 155. The second insulating member 16 is provided with a mounting hole corresponding to the third mounting hole 1315. The terminal post 132 passes through the third mounting hole 1315, the first mounting hole 142, the second mounting hole 155, the mounting hole of the end cove 111a, and the mounting hole of the second insulating member 16. The first insulating member 15 is an upper plastic part, and the second insulating member 16 is a lower plastic part. In the thickness direction Z of the end cover 111a, a projection of the welded portion 40 falls within a projection of the protective member 14.

It should be noted that the embodiments in the present application and features in the embodiments may be mutually combined in the case of no conflict.

The above embodiments are only used for illustrating the technical solutions of the present application, and are not intended to limit the present application. For those skilled in the art, the present application may have various modifications and changes. Any modifications, equivalent substitutions, improvements, etc. made within the spirit and principles of the present application shall fall into the scope of protection of the present application.

## Claims

1. A battery, comprising:
battery cells, each of the battery cells comprising a shell and electrode terminals, the shell having a first wall, and the electrode terminals being disposed on the first wall; and
busbar components connected to the electrode terminals and configured to achieve electrical connection of a plurality of battery cells;
wherein each of the busbar components is provided with an accommodating portion, and at least a part of each of the electrode terminals is accommodated in the accommodating portion.

2. The battery according to claim 1, wherein in a thickness direction of the first wall, the busbar component has a first surface facing the first wall and a second surface facing away from the first wall, and the accommodating portion is a through hole extending through the first surface and the second surface.

3. The battery according to claim 2, wherein the electrode terminal comprises a conductive member and a terminal post, the conductive member is disposed on an outer side of the first wall, the terminal post is connected to the conductive member, and at least a part of the conductive member is accommodated in the through hole.

4. The battery according to claim 3, wherein a wall of the through hole is welded to the conductive member to form a welded portion, and at least a part of the welded portion is exposed on the second surface.

5. The battery according to claim 3 or 4, wherein in the thickness direction of the first wall, the conductive member has a third surface facing away from the first wall, the second surface being flush with the third surface.

6. The battery according to any one of claims 3 to 5, wherein the conductive member comprises a body and a boss, the boss is disposed on a side of the body facing away from the first wall, at least a part of the boss is accommodated in the accommodating portion, and the busbar component abuts against the body in the thickness direction of the first wall.

7. The battery according to claim 6, wherein the cross-sectional area of the boss gradually decreases along the thickness direction of the first wall and in a direction away from the interior of the shell.

8. The battery according to claim 7, wherein a diameter of the through hole gradually decreases along the thickness direction of the first wall and in the direction away from the interior of the shell.

9. The battery according to claim 8, where the wall of the through hole is welded to an outer peripheral surface of the boss.

10. The battery according to any one of claims 3 to 9, wherein the battery cell further comprises a protective member and a first insulating member, the first insulating member is disposed between the first wall and the conductive member to insulate the conductive member from the first wall, at least a part of the protective member is disposed between the first insulating member and the conductive member in the thickness direction of the first wall, and a melting point of the protective member is higher than a melting point of the conductive member.

11. The battery according to claim 10, wherein the melting point of the protective member ranges from 1,000°C to 3,000°C.

12. The battery according to claim 10 or 11, wherein the material of the protective member comprises one of steel, zinc and copper, and the material of the conductive member comprises aluminum.

13. The battery according to any one of claims 10 to 12, wherein in the thickness direction of the first wall, the protective member has a thickness H₁, and the conductive member has a thickness H₂, which satisfy 1/10≤H₁/H₂≤1/4.

14. The battery according to any one of claims 10 to 13, wherein in the thickness direction of the first wall, a thickness H₁ of the protective member satisfies 0.3 mm≤H₁≤1 mm.

15. The battery according to claim 14, wherein 0.5 mm≤H₁≤0.8 mm is satisfied.

16. The battery according to any one of claims 10 to 15, wherein in the thickness direction of the first wall, a thickness H2 of the conductive member satisfies 1 mm≤ H₂≤2.5 mm.

17. The battery according to claim 16, wherein 1.5 mm≤H₂≤2 mm is satisfied.

18. The battery according to any one of claims 10 to 12, wherein the conductive member has a fourth surface facing the first insulating member, and the protective member is a plating deposited on the fourth surface.

19. The battery according to any one of claims 10 to 17, wherein the protective member is connected to the conductive member; or
the protective member is connected to the first insulating member.

20. The battery according to any one of claims 10 to 17, and 19, wherein the first insulating member is a plastic part, and the plastic part is injection-molded on the protective member.

21. The battery according to any one of claims 10 to 17, 19, and 20, wherein the protective member is provided with a limiting portion, and the first insulating member is provided with a mating portion that engages with the limiting portion.

22. The battery according to claim 21, wherein the limiting portion is a protrusion and the mating portion is a recess.

23. The battery according to claim 22, wherein the protrusion is disposed at an edge of the protective member, a plurality of protrusions are provided, and the plurality of protrusions are spaced apart in a circumferential direction of the protective member; and
the first insulating member has a fifth surface facing the protective member, the fifth surface is provided with a plurality of ribs, the plurality of ribs are spaced apart around the protective member, each of the ribs extends along the circumferential direction of the protective member, and one recess is formed between every two adjacent ribs.

24. The battery according to claim 23, wherein the first insulating member comprises a bottom wall and a side wall surrounding the bottom wall, the ribs are disposed at the junction between the bottom wall and the side wall, and a surface of the bottom wall facing the protective member is the fifth surface.

25. The battery according to any one of claims 10 to 17, and 19 to 24, wherein the first insulating member comprises a bottom wall and a side wall surrounding the bottom wall, at least a part of the protective member is disposed between the bottom wall and the conductive member, and, in the thickness direction of the first wall, the protective member has a thickness H₁ and the bottom wall has a thickness H₃, which satisfy 1/10≤H₁/H₃≤1/2.

26. The battery according to any one of claims 10 to 17, and 19 to 25, wherein the busbar component is welded to the conductive member to form a welded portion, and the busbar component is configured to achieve electrical connection of a plurality of battery cells; and
in the thickness direction of the first wall, a projection of the welded portion falls within a projection of the protective member.

27. The battery according to any one of claims 1 to 17, and 19 to 26, wherein in the thickness direction of the first wall, the busbar component has a thickness H₄ and the conductive member has a thickness H₂, which satisfy 1/3≤H₄/H₂<1.

28. The battery according to any one of claims 1 to 17, and 19 to 27, wherein the shell comprises a case and an end cover, one end of the case forms an opening, the end cover covers the opening, and the end cover serves as the first wall.

29. An electrical device, comprising the battery according to any one of claims 1 to 28, wherein the battery is configured to supply electric energy to the electrical device.
